(19) Europäisches Patentamt
European Patent Office
Office européen des brevets

(11) **EP 4 060 100 A1**

(12) **EUROPEAN PATENT APPLICATION**
published in accordance with Art. 153(4) EPC

(43) Date of publication:
**21.09.2022 Bulletin 2022/38**

(21) Application number: **20886825.7**

(22) Date of filing: **11.11.2020**

(51) International Patent Classification (IPC):
***D01F 6/90*** (2006.01)   ***C08L 77/00*** (2006.01)

(52) Cooperative Patent Classification (CPC):
**C08L 77/00; D01F 6/90**

(86) International application number:
**PCT/JP2020/042138**

(87) International publication number:
**WO 2021/095783 (20.05.2021 Gazette 2021/20)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **14.11.2019 JP 2019206559**

(71) Applicant: **Kuraray Co., Ltd.**
**Kurashiki-shi, Okayama 710-0801 (JP)**

(72) Inventors:
• **OHGA, Daisuke**
  **Kurashiki-shi, Okayama 713-8550 (JP)**

• **NAKATSUKA, Hitoshi**
  **Saijo-shi, Ehime 793-8585 (JP)**
• **KAWAKADO, Shinya**
  **Kurashiki-shi, Okayama 713-8550 (JP)**
• **IKEDA, Takayuki**
  **Kurashiki-shi, Okayama 713-8550 (JP)**
• **ONOGI, Shoji**
  **Osaka-shi, Osaka 530-8611 (JP)**
• **YAMASAKI, Kohei**
  **Kurashiki-shi, Okayama 713-8550 (JP)**

(74) Representative: **Müller-Boré & Partner**
**Patentanwälte PartG mbB**
**Friedenheimer Brücke 21**
**80639 München (DE)**

(54) **POLYAMIDE FIBERS, METHOD FOR PRODUCING SAME AND FIBER STRUCTURE**

(57)    Provided is a polyamide fiber having excellent color developability, as well as a method for producing such a polyamide fiber, and a fiber structure. The polyamide fiber comprises a polyamide resin composition comprising a polyamide resin and an amino group-containing color enhancer, the polyamide fiber having terminal amino groups at a concentration of from 5.0 $\mu$eq/g to 40.0 $\mu$eq/g. Such a fiber can be produced by a production method at least comprising: melt-kneading a polyamide resin composition including a polyamide resin and an amino group-containing color enhancer to give a melt-kneaded product having a predetermined melt viscosity; and spinning the melt-kneaded product to give fibers.

EP 4 060 100 A1

**Description**

CROSS REFERENCE TO THE RELATED APPLICATION

This application is based on and claims Convention priority to Japanese patent application No. 2019-206559, filed November 14, 2019, the entire disclosure of which is herein incorporated by reference as a part of this application.

FIELD OF THE INVENTION

The present invention relates to a polyamide fiber having excellent color developability, a method for producing the same, and a fiber structure.

BACKGROUND OF THE INVENTION

A polyamide resin is a crystalline linear polymer including an amide bond (-CONH-) as a repeating unit in the molecular chain. Resins categorized as grades with excellent chemical resistance, cold resistance and the like include polyamide 9, polyamide 10, polyamide 11, polyamide 12, etc. Resins categorized as grades with elasticity include polyamide elastomers.

Of the grades of the polyamide resins, there are some resins aimed at improvement in dyeability. For example, Patent Document 1 (International Publication No. 2017/146018) discloses, for the purpose of improvement in dyeability and color fastness, a polyamide elastomer composition containing a polyamide elastomer and a phosphite compound, the phosphite compound being contained at a concentration of from 0.02% to 0.15% by mass based on the polyamide elastomer, and the polyamide elastomer having terminal amino groups at a concentration of $2.0 \times 10^{-5}$ eq/g or higher. This polyamide elastomer composition is used for molded products, fibers, clothing buttons, zip fasteners, and the like.

Patent Document 2 (JP Laid-open Patent Publication No. 2010-189773) discloses a conjugate fiber that has a divided bicomponent structure and includes a component containing a polyamide elastomer and a component containing a polyester resin, characterized in that the fiber contains 40% to 80% by weight of the polyamide elastomer. The conjugate fiber has excellent dyeability and can be used to produce a fabric having good cool touch and pleasant feel on the skin.

CONVENTIONAL ART DOCUMENT

PATENT DOCUMENT

[Patent Document 1] International Publication No. 2017/146018
[Patent Document 2] JP Laid-open Patent Publication No. 2010-189773

SUMMARY OF THE INVENTION

As for the polyamide elastomer composition of Patent Document 1, however, it is necessary to add the phosphite compound or to adjust the concentration of terminal amino groups during melt-polymerization in order to improve dyeability and color fastness, which leads to not only impairment in texture which is a characteristic of the polyamide elastomer fiber, but also deterioration in spinnability as well as higher costs due to the complicated processes. Patent Document 2 uses the polyamide elastomer in combination with the polyester to achieve dyeability, which may cause problems such as deterioration in texture and functionality (such as flexibility and hydrolysis resistance) which are characteristics of the polyamide elastomer.

An object of the present invention is to provide a polyamide fiber which is excellent in color developability and can be applicable without deteriorating characteristics of a polyamide resin, as well as a method for producing such a polyamide fiber, and a fiber structure.

As a result of intensive studies conducted by the inventors of the present invention to solve the problem, the inventors found that a polyamide fiber having excellent color developability and maintaining characteristics of the polyamide resin can be obtained by combining a polyamide resin for fiberization with an amino group-containing color enhancer to give a resin composition and using the amino group-containing color enhancer to control a concentration of terminal amino groups in the fiber to a specific value. The present inventors thus achieved the present invention.

That is, the present invention may include the following aspects.

Aspect 1

A polyamide fiber comprising a polyamide resin composition comprising (or including) a polyamide resin and an amino group-containing color enhancer (color improver),
the polyamide fiber having terminal amino groups at a concentration of from 5.0 μeq/g to 40.0 μeq/g (preferably from 10.0 μeq/g to 35.0 μeq/g, and more preferably from 12.0 μeq/g to 30.0 μeq/g).

Aspect 2

The polyamide fiber according to aspect 1, wherein the polyamide resin has a repeating unit which includes a linear or branched saturated aliphatic hydrocarbon group having 1 to 22 carbon atoms.

Aspect 3

The polyamide fiber according to aspect 1 or 2, wherein the polyamide resin contains a polyamide elastomer.

Aspect 4

The polyamide fiber according to any one of aspects 1 to 3, wherein the amino group-containing color enhancer comprises (or includes) a polyamide oligomer.

Aspect 5

The polyamide fiber according to aspect 4, wherein the polyamide oligomer has a number-average molecular weight of from 500 to 10000 (preferably from 500 to 9000, and more preferably from 1000 to 6000).

Aspect 6

The polyamide fiber according to any one of aspects 1 to 5, wherein the amino group-containing color enhancer has terminal amino groups at a concentration of from 100 μeq/g to 2000 μeq/g (preferably from 125 μeq/g to 2000 μeq/g, and more preferably from 200 μeq/g to 1000 μeq/g).

Aspect 7

The polyamide fiber according to any one of aspects 1 to 6, wherein the polyamide fiber contains the polyamide resin and the amino group-containing color enhancer at a mass ratio (the former / the latter) of from 99/1 to 70/30 (preferably from 98/2 to 75/25, and more preferably from 95/5 to 80/20).

Aspect 8

The polyamide fiber according to any one of aspects 1 to 7, wherein a DSC curve of the polyamide fiber obtained using differential scanning calorimetry shows a melt peak in a single peak form.

Aspect 9

A fiber structure comprising polyamide fibers as recited in any one of aspects 1 to 8.

Aspect 10

A method of producing polyamide fibers as recited in any one of aspects 1 to 8, the method at least comprising:

melt-kneading a polyamide resin composition comprising a polyamide resin and an amino group-containing color enhancer to give a melt-kneaded product having a predetermined melt viscosity; and
spinning the melt-kneaded product to give fibers.

EFFECTS OF THE INVENTION

Polyamide fibers according to the present invention can have terminal amino groups at a concentration controlled to a specific value thanks to an amino group-containing color enhancer contained in the polyamide fibers, so that the polyamide fibers can exhibit improved color developability while maintaining characteristics of the polyamide resin constituting the polyamide fiber.

DESCRIPTION OF THE EMBODIMENTS

A polyamide fiber according to the present invention is spun from a polyamide resin composition comprising a polyamide resin and an amino group-containing color enhancer.

Polyamide Resin

The polyamide resin at least includes a repeating unit comprising an optionally substituted divalent hydrocarbon group, wherein the repeating unit is connected to another repeating unit via amide bonding. For example, the polyamide resin at least includes any one of repeating units expressed by the following formulae (1) to (3).

$$-NH-R1-NH- \qquad (1)$$

$$-CO-(R2)_m-CO- \qquad (2)$$

$$-NH-R3-CO- \qquad (3)$$

R1, R2, and R3 may be the same or different from each other. Each represents a hydrocarbon group having 1 to 22 carbon atoms, and m is an integer of 0 or 1.

Formula (1) represents a repeating unit derived from a diamine compound, formula (2) represents a repeating unit derived from a dicarboxylic acid compound, and formula (3) represents a repeating unit derived from a lactam- or $\omega$-aminocarboxylic acid.

Examples of a hydrocarbon group having 1 to 22 carbon atoms may include: a linear or branched saturated aliphatic hydrocarbon group having 1 to 22 carbon atoms (preferably 6 to 20, and more preferably 9 to 18), a linear or branched saturated alicyclic hydrocarbon group having 6 to 22 carbon atoms (preferably 6 to 20, and more preferably 6 to 18), and a linear or branched aromatic hydrocarbon group having 6 to 22 carbon atoms (preferably 6 to 20, and more preferably 6 to 18). These hydrocarbon groups may be optionally substituted as long as the effects of the present invention are not spoiled.

Of these groups, from the viewpoint of spinnability, preferred polyamide resins include a polyamide resin having a repeating unit including a linear or branched saturated aliphatic hydrocarbon group having 2 to 22 carbon atoms. In particular, from the viewpoint of imparting high functionality, preferred polyamide resins include a polyamide resin having a repeating unit including a linear or branched saturated aliphatic hydrocarbon group having 6 to 20 carbon atoms (preferably 9 to 18).

Examples of preferred polyamide resins may include: a polyamide 6, a polyamide 6/6, a polyamide 6/10, a polyamide 6/11, a polyamide 6/12, a polyamide 9, a polyamide 10, a polyamide 11, a polyamide 12, a polyamide MXD6, etc.

As a highly functional polyamide resin having excellent chemical resistance, cold resistance, or others, preferred polyamide resin may include a polyamide resin (aliphatic polyamide resin) including a long $CH_2$ group having a large number of carbon atoms such as a polyamide 9, a polyamide 10, a polyamide 11, and a polyamide 12.

The polyamide resin may include not only a non-elastomer polyamide, but also a polyamide elastomer. A polyamide elastomer is preferable in that it can impart distinctive texture to the fiber.

The polyamide elastomer may be a polyether block polyamide, a polyester block polyamide, or a polyester ether block polyamide, all of which contain a polyamide resin component as a hard segment and a polyether block and/or a polyester block as a soft segment.

The polyether block may be a linear or branched saturated aliphatic polyether having 2 to 10 carbon atoms and may be preferably a segment having 2 to 6 carbons between ether bonds, such as a polyethylene glycol, a polypropylene glycol, a polytrimethylene glycol, a polytetramethylene glycol, a polypentamethylene glycol, and a polyhexamethylene glycol.

A ratio (mass ratio) of the hard segment to the soft segment is not limited to a specific value as long as the resin is spinnable and may be, for example, from about 50/50 to 95/5, preferably from about 60/30 to 92/8, and more preferably from about 70/30 to 90/10.

The polyamide elastomer may contain, for example, an aliphatic polyamide having 6 to 22 carbon atoms as a hard segment. The polyamide elastomer may preferably contain an aliphatic polyamide having 9 to 20 carbon atoms as a hard segment. As used herein, the term "aliphatic polyamide" means a polyamide in which the hydrocarbon group in the repeating unit represented by any of the above formulae (1) to (3) is a saturated aliphatic hydrocarbon group.

Specifically, for example, the polyamide elastomer may be a polyether block polyamide which contains a polyamide 6, a polyamide 6/6, a polyamide 6/11, a polyamide 6/12, a polyamide 9, a polyamide 11, a polyamide 12, or the like as a hard segment and a polyethylene glycol, a polypropylene glycol, a polytetramethylene glycol, or the like as a soft segment.

Amino Group-Containing Color Enhancer

The amino group-containing color enhancer (color improver) at least contains an amino group and can be used in combination with a polyamide resin to attain a predetermined concentration of terminal amino groups in a polyamide fiber. The amino group-containing color enhancer may have terminal amino groups at a concentration of, for example, from 100 to 2000 $\mu$eq/g, preferably from 125 to 2000 $\mu$eq/g, and more preferably from 200 to 1000 $\mu$eq/g.

As long as the characteristics of the polyamide resin exhibited in the polyamide fiber are not impaired, the amino group-containing color enhancer can be blended with the resin at a suitable ratio according to the type of the amino group-containing color enhancer. For instance, the mass ratio of the polyamide resin to the amino group-containing color enhancer (the former / the latter) may be, for example, from 99/1 to 70/30, preferably from 98/2 to 75/25, and more preferably from 95/5 to 80/20 in terms of color developability and compatibility.

The polyamide fiber (in particular, polyamide elastomer fiber) may include the polyamide resin (in particular, polyamide elastomer resin) in a proportion of, for example, from 70 to 99% by mass, preferably from 75 to 98% by mass, and more preferably from 80 to 95% by mass

Examples of the amino group-containing color enhancer may include amino group-containing compounds such as polyamide oligomers and various amines, in terms of improving color developability of the polyamide fiber without impairing the characteristics of the polyamide resin.

Such a polyamide oligomer preferably includes any one of the repeating units represented by formulae (1) to (3) listed for the polyamide resin. Examples of the hydrocarbon group having 1 to 22 carbon atoms in the repeating unit represented by the formulae (1) to (3) may include: a linear or branched saturated aliphatic hydrocarbon group having 1 to 22 carbon atoms (preferably 6 to 20, and more preferably 9 to 18), a linear or branched saturated alicyclic hydrocarbon group having 6 to 22 carbon atoms (preferably 6 to 20, and more preferably 6 to 18), and a linear or branched aromatic hydrocarbon group having 6 to 22 carbon atoms (preferably 6 to 20, and more preferably 6 to 18). These hydrocarbon groups may be optionally substituted as long as the effects of the present invention are not impaired.

Examples of a preferred polyamide oligomer may include: a polyamide 6 oligomer, a polyamide 4/6 oligomer, a polyamide 6/6 oligomer, a polyamide 6/10 oligomer, a polyamide 6/11 oligomer, a polyamide 6/12 oligomer, a polyamide 9 oligomer, a polyamide 10 oligomer, a polyamide 11 oligomer, and a polyamide 12 oligomer.

In terms of compatibility with the polyamide resin, the polyamide oligomer and the polyamide resin may preferably have a similar number of carbon atoms in the hydrocarbon group of the repeating unit. For example, the number of carbon atoms in the hydrocarbon group of the repeating unit in the polyamide oligomer may be fall within a range of N $\pm$ 3, wherein N denotes the number of carbon atoms in the repeating unit in the polyamide resin, preferably within a range of N $\pm$ 2, and more preferably within a range of N $\pm$ 1. Where the polyamide resin is a polyamide elastomer, the hydrocarbon group of the repeating unit of the polyamide resin component in the hard segment may preferably satisfy the above relation.

The polyamide oligomer may have a number-average molecular weight of, for example, from 500 to 10000, preferably from 500 to 9000, and more preferably from 1000 to 6000. The molecular weight of the polyamide oligomer is determined in accordance with the method described in Examples.

The various amines are not limited to monomers or polymers with a structure having 3 to 12 amino groups and may be various linear aliphatic, alicyclic, or aromatic amines (such as diamine, triamine, tetraamine).

The polyamide resin composition used in the present invention may contain various types of commonly used additives as needed. Examples of such additives may include: heat stabilizers, antioxidants, light stabilizers, UV absorbers, antistatic agents, colorants (e.g., color pigments), smoothing agents, plasticizers, antibacterial agents, fungicides, and deodorants. The polyamide resin composition used in the present invention may contain other thermoplastic resins as long as the effects of the present invention are not impaired.

The polyamide resin composition used in the present invention may preferably have a melt viscosity of from 600 to 3000 poises at 240°C in terms of facilitating fiberization. A polyamide resin having a melt viscosity exceeding 3000 poises may lead to deterioration in high-speed spinnability during fiberization. A polyamide resin having a melt viscosity below 600 poises may easily cause fiber breakage during spinning and have poor productivity, and resultant fibers may have low tenacity. The polyamide resin composition may more preferably have a melt viscosity of from 800 to 2000 poises.

The polyamide resin composition used in the present invention may preferably have good compatibility between the polyamide resin and the amino group-containing color enhancer. For example, a DSC curve of the polyamide fiber obtained using differential scanning calorimetry (DSC) may preferably show a melt peak in a single peak form.

Determination of whether or not a melt peak has a single peak form can be made by examining a DDSC curve obtained by differentiating a DSC curve. A DDSC curve is a primary derivative curve of a DSC curve with respect to time and indicates the slope of the DSC curve. Therefore, since the DDSC curve takes the value of zero when the slope of the DSC curve is zero, the DDSC curve takes the value of zero at points of the maximum and minimum in the DSC curve. That is, it can be determined that a DSC curve shows a melt peak in a single peak form when a DDSC curve thereof takes the value of zero only at one point.

The polyamide fiber according to the present invention may be produced by any known method as long as the fibers can be spun. For example, the polyamide resin composition may undergo melt spinning to give fibers. Melt spinning may be performed by, for example, spinning and drawing method, direct drawing method, or POY (partially oriented yarn) - DTY (draw-textured yarn) method. Alternatively, the polyamide resin composition may be fiberized by melt-blowing method, or electrospinning method.

For example, a method for producing a polyamide fiber may include: melt-kneading a polyamide resin composition to give a melt-kneaded product having a predetermined melt viscosity, and spinning the melt-kneaded product to give fibers.

For example, the melt-kneading process may be carried out either by melt-kneading a polyamide resin with an amino group-containing color enhancer; or by first preparing a polyamide resin composition (master batch) containing an amino group-containing color enhancer and then kneading a polyamide resin and the master batch, so as for the melt-kneaded product to be fed for melt-spinning to give fibers.

In the spinning process, use of the amino group-containing color enhancer makes it possible to adjust the melt viscosity of the polyamide resin composition to a viscosity suitable for spinning, so that spinnability can be improved as compared with the case of spinning the polyamide resin alone.

Since the polyamide fiber of the present invention has excellent color developability, the method may further include dyeing the obtained fibers. The dyeing process may be carried out by a known method in accordance with a dye used.

Examples of dye may include: an acid dye, an acid mordant dye, a metal complex acid dye, and a disperse dye. Of these, preferred dyes in terms of color developability and spinnability are an acid dye, an acid mordant dye, and a metal complex acid dye.

Acid dyes contain a sulfonic acid group, a carboxyl group, a hydroxy group, and/or the like as a soluble group. Examples of the acid dye may include: azo-based, triphenylmethane-based, anthraquinone-based, oxygen anthracene-based, phthalocyanine-based, indigoid-based, nitroso-based, and pyrazolone-based acid dyes.

Acid mordant dyes can exhibit color developability as acid dyes and mainly produce metal complexes (for example, coordinate bonds with chromium atoms). Examples of acid mordant dyes may include: azo-based, triphenylmethane-based, anthraquinone-based, oxygen anthracene-based, phthalocyanine-based, indigoid-based, nitroso-based, and pyrazolone-based acid mordant dyes.

Metal complex acid dyes are generally categorized into 1:1 type dyes in which one metal atom is bonded to one dye molecule, and 1:2 type dyes in which one metal atom is bonded to two dye molecules. Examples of metal complex acid dyes may include: azo-based, triphenylmethane-based, anthraquinone-based, oxygen anthracene-based, phthalocyanine-based, indigoid-based, nitroso-based, and pyrazolone-based metal complex acid dyes.

Polyamide Fiber

The polyamide fiber according to the present invention may have terminal amino groups at a concentration of from 5.0 to 40.0 $\mu$eq/g, preferably from 10.0 to 35.0 $\mu$eq/g, and more preferably from 12.0 to 30.0 $\mu$eq/g. In the polyamide fiber, an amino group-containing color enhancer may be used to increase the concentration of terminal amino groups present in the fiber. However, where the concentration of terminal amino groups exceeds the above upper limit due to, e.g., excessive addition of the amino group-containing color enhancer, the properties of the polyamide resin (for example, washing fastness) may be deteriorated.

The polyamide fiber according to the present invention may be a monofilament or a multifilament. The polyamide fiber may be a composite fiber (for example, core-sheath type, sea-island type, side-by-side type). Even in a case of a non-composite fiber, the polyamide fiber can still exhibit good color developability.

The polyamide fiber according to the present invention may have any known or conventional cross-sectional configuration, such as solid circular forms or variant forms (for example, flat form, ellipse form, and polygonal form such as triangle form). The polyamide fiber may have a hollow cross-sectional configuration.

The polyamide fiber according to the present invention is not specifically limited in terms of its fineness and may have a single fiber fineness of, for example, from about 0.1 to about 1000 dtex, preferably from 1 to 100 dtex, and more preferably from 2 to 50 dtex depending on the intended use. For example, where the polyamide fiber is used for a fabric, the polyamide fiber may have a single fiber fineness of from 1 to 10 dtex or from 1 to 5 dtex.

The polyamide fiber according to the present invention may preferably have a fiber tenacity of 1.0 cN/dtex or higher, for example, from 1.0 to 10 cN/dtex, and more preferably from 2.0 to 10 cN/dtex at room temperature. The fiber tenacity is measured in accordance with JIS L 1013 test method.

The polyamide fiber according to the present invention has excellent color developability. In particular, the polyamide fiber has excellent color developability in deep color dyeing, e.g., dark blue, dark brown, or black. The polyamide fiber according to the present invention may have an L* value of, for example, 20 or lower in deep color dyeing, preferably 19 or lower, and more preferably 18 or lower. The L* value is determined in accordance with the method described in Examples.

The polyamide fiber according to the present invention may also have good washing fastness. For example, the polyamide fiber can achieve grade 4 or higher in a washing fastness test defined in JIS L 0844.

The polyamide fiber according to the present invention may also have good light fastness. For example, the polyamide fiber can achieve grade 3 or higher in a light fastness test defined in JIS L 0842.

Where the polyamide fiber according to the present invention comprises a polyamide elastomer as a base resin, the polyamide fiber can have particularly excellent texture. The term "texture" herein is used to indicate excellence of a fiber in its grip performance (slip resistance).

Fiber Structure

The present invention encompasses a fiber structure comprising the polyamide fibers. The fiber structure may be a one-dimensional structure such as continuous fibers (monofilaments, multifilaments), short fibers (cut fibers), yarns or threads, strings, ropes, and the like, or a fabric comprising the polyamide fibers such as woven fabrics, knitted fabrics, non-woven fabric, and the like. The fiber structure may be composed of the polyamide fibers only or comprise the polyamide fibers in combination of other fibers.

EXAMPLES

Hereinafter, the present invention will be specifically described with reference to Examples. The Examples, however, are not to be construed as limiting the scope of the present invention.

Concentration of Terminal Amino Groups ($NH_2$)

A sample (approximately 1 g) of a polyamide fiber or an amino group-containing color enhancer was dissolved in 40 mL of a phenol / methanol mixed solvent (volume ratio: 9/1) to give a sample solution. After timor blue was added as an indicator to the obtained sample solution, titration was carried out with N/20 hydrochloric acid to measure a concentration of terminal amino groups $NH_2$ ($\mu$eq/g).

Melt Viscosity

A polyamide resin composition containing an amino group-containing color enhancer was extruded to give pellets in order to reproduce a melt viscosity during spinning, and a melt viscosity was measured using "Capilograph 1C PMD-C" manufactured by Toyo Seiki Seisaku-sho, Ltd. at 240°C and a shear rate of 1000 sec$^{-1}$.

Number-Average Molecular Weight

A number-average molecular weight (Mn) was calculated from a concentration of terminal amino groups ($NH_2$) and a concentration of terminal carboxyl groups (COOH) by the following formula:

$$Mn = 2 \ / \ (\text{concentration of terminal amino groups } (NH_2) + \text{concentration of}$$

$$\text{terminal carboxyl groups (COOH)}).$$

The concentration of terminal carboxyl groups (COOH) was measured in the following manner.

A sample (approximately 0.5 g) of a polyamide fiber or an amino group-containing color enhancer was dissolved in 50 mL of benzyl alcohol to give a sample solution. After phenolphthalein was added as an indicator to the obtained sample solution, titration was carried out with N/20 potassium hydroxide / methanol solution to measure a concentration of terminal carboxyl groups COOH ($\mu$eq/g)

Spinnability

Spinnability was evaluated on the basis of fluffing and/or fiber breakage during spinning to give 100 kg of polyamide fibers:

Good: no fluffing or fiber breakage during spinning,
Moderate: 1 to 2 times of fluffing and/or fiber breakage during spinning, and
Poor: 3 or more times of fluffing and/or fiber breakage during spinning.

Compatibility of Amino Group-Containing Color Enhancer

Compatibility of an amino group-containing color enhancer in a polyamide fiber was evaluated on the basis of whether a DSC curve of the polyamide fiber obtained using differential scanning calorimetry (DSC) showed a melt peak in a single peak form:

Good: a melt peak appears in a single peak form, and
Poor: a melt peak does not appear in a single peak form.

The DSC curve was obtained from measurement up to 300°C at a heating rate of 10°C/min in a nitrogen atmosphere, using a differential scanning calorimeter "TA-4000" manufactured by Mettler-Toledo International Inc.

Fineness

A fineness of a fiber was measured in accordance with JIS L 1013 "chemical fiber filament yarn test method."

L* value

Fibers obtained in each of Examples and Comparative Examples were formed into a knitted fabric. An L* value of the knitted fabric was measured using a spectrophotometer "CM-3700A" manufactured by KONICA MINOLTA, INC., under the following conditions: regular reflection processing: SCE, measurement diameter: LAV (25.4 mm), UV condition: 100% Full, visual field: 2 degrees, and main light source: C light source.

Washing Fastness

Fibers obtained in each of Examples and Comparative Examples were formed into a knitted fabric. Washing fastness of the knitted fabric was measured in accordance with JIS L 0844 B-4 measurement method.

Light Fastness

Fibers obtained in each of Examples and Comparative Examples were formed into a knitted fabric. Light fastness of the knitted fabric was measured in accordance with JIS L 0842 ultraviolet carbon arc measurement method.

Tenacity

In accordance with JIS L 1013, tenacity and elongation at break (initial tensile resistance) of each sample was measured under the following conditions: sample length: 20 cm, initial load: 0.1 g/d, and tensioning speed: 10 cm/min. An average value of 5 measurements or more was adopted.

Evaluation of Texture

Fibers obtained in each of Examples and Comparative Examples were formed into a knitted fabric as a sample fabric. Each of 10 participants as test panel evaluated grip performance of the sample fabric. In this test, slip resistance of each sample was evaluated upon touching the knitted fabric as compared with a similarly prepared knitted fabric made of polyamide 12, which was not an elastomer, in accordance with the following evaluation criteria:

Excellent: all 10 participants felt slip resistance of the sample fabric,
Good: 8 to 9 participants felt slip resistance of the sample fabric,
Moderate: 5 to 7 participants felt slip resistance of the sample fabric, and

Poor: 4 or fewer participants felt slip resistance of the sample fabric.

Example 1

(1) Preparation of Polyamide 12 Oligomer

In an autoclave purged with nitrogen, 1.000 g of lauryl lactam and 38 g of dodecanediamine were added with a small amount of water and a small amount of phosphoric acid to give a mixture. The obtained mixture was heated under stirring. The reaction system was subjected to gradual temperature increase and pressure adjustment with nitrogen gas, and then the reaction system maintained at 270°C at a pressure of 17.5 kgf/cm$^2$ (1.7 × 10$^6$ Pa) was heated under stirring for about 4 hours. Next, the pressure of the reaction system was allowed to gradually return to normal pressure, and followed by pressure decrease in about 1 hour to discharge water in the system with a very small amount of nitrogen gas being circulated. Then, while the system was cooled under normal pressure, a polyamide 12 oligomer was taken out in a molten state. The obtained polyamide 12 oligomer was cooled further to give a slightly brittle solid. The polyamide 12 oligomer had a low number-average molecular weight of approximately 5400 and a content of terminal amino groups of 350 μeq/g. The polyamide 12 oligomer was used as an amino group-containing color enhancer.

(2) Preparation of Polyamide 12 Elastomer Fibers

In accordance with the following procedure, polyamide elastomer fibers were produced. A polyamide 12 elastomer ("VESTAMID E47-S1" available from Daicel-Evonik Ltd.) was used as a polyamide resin. The above-described polyamide 12 oligomer as the amino group-containing color enhancer was added at a weight proportion of 9%, and the mixture was molten using an extruder to be discharged through a spinning nozzle at 250°C.

The as-spun fibers from the spinning nozzle were quenched using a horizontally-blowing type cooling air device which was 1.0-m long and then were continuously introduced into a tube heater (inner wall temperature: 130°C) which was installed at a position of 1.3 m from a point immediately below the spinneret and had a length of 1.0 m and an inner diameter of 30 mm for drawing the fibers in the tube heater. Then, a spinning oil was applied to the drawn fibers from the tube heater, and the oil-applied fibers were subsequently wound up using a roller at a winding speed of 3000 m/min to obtain polyamide 12 elastomer fibers of 84 dtex / 24 filaments. The fibers had terminal amino groups at a concentration of 17.6 μeq/g. A tubular knitted fabric made of the fibers was prepared to have a basis weight of 200 g/m$^2$ and was scoured. Then, the fabric was dyed with Kayanol Milling Black TLB (4% owf), at a bath ratio of 1:50 at a temperature of 80°C for 40 minutes. Various properties of the fabric were measured.

Example 2

Polyamide 12 elastomer fibers were obtained by spinning in a similar manner as Example 1, except that the polyamide 12 oligomer was added at a weight proportion of 20%. The fibers had terminal amino groups at a concentration of 38.5 μeq/g. A tubular knitted fabric made of the fibers was prepared and dyed in a similar manner as Example 1. Various properties of the fabric were measured.

Example 3

Polyamide 12 elastomer fibers were obtained by spinning in a similar manner as Example 1, except that the polyamide 12 oligomer was added at a weight proportion of 6%. The fibers had terminal amino groups at a concentration of 12.1 μeq/g. A tubular knitted fabric made of the fibers was prepared and dyed in a similar manner as Example 1. Various properties of the fabric were measured.

Comparative Example 1

Polyamide 12 elastomer fibers were obtained by spinning in a similar manner as Example 1, except that the polyamide 12 oligomer was not added. The fibers had terminal amino groups at a concentration of 4.0 μeq/g. A tubular knitted fabric made of the fibers was prepared and dyed in a similar manner as Example 1. Various properties of the fabric were measured.

Comparative Example 2

Polyamide 12 elastomer fibers were obtained by spinning in a similar manner as Example 1, except that the polyamide 12 oligomer was added at a weight proportion of 35%. The fibers had terminal amino groups at a concentration

of 63.8 μeq/g. A tubular knitted fabric made of the fibers was prepared and dyed in a similar manner as Example 1. Various properties of the fabric were measured.

Table 1 shows the properties of the obtained polyamide 12 elastomer fibers.

[Table 1]

| | | Example 1 | Example 2 | Example 3 | Comparative Example 1 | Comparative Example 2 |
|---|---|---|---|---|---|---|
| Polyamide resin | | Polyamide 12-based elastomer | Polyamide 12-based elastomer | Polyamide 12-based elastomer | Polyamide 12-based elastomer | Polyamide 12-based elastomer |
| Amino group-containing color enhancer | Number-average molecular weight | 5400 | 5400 | 5400 | - | 5400 |
| | Concentration of terminal amino groups [μeq/g] | 350 | 350 | 350 | - | 350 |
| | Addition amount [wt%] | 9 | 20 | 6 | - | 35 |
| Polyamide fiber | Spinnability | Good | Good | Good | Moderate | Moderate |
| | Compatibility of amino group-containing color enhancer | Good | Good | Good | - | Poor |
| | Concentration of terminal amino groups [μeq/g] | 17.6 | 38.5 | 12.1 | 4.0 | 63.8 |
| | Tenacity [cN/dtex] | 1.80 | 1.67 | 1.84 | 1.90 | 1.32 |
| | Color developability (L* value) | 14.1 | 12.3 | 18.7 | 34.0 | 12.1 |
| | Washing fastness rating (Fading and discoloration) | 5 | 5 | 5 | 3 | 3 |
| | Light fastness rating | 4 | 4 | 4 | 2 | 2 |
| | Texture | Excellent | Excellent | Excellent | Excellent | Poor |

Examples 1 to 3 have good spinnability because the amino group-containing color enhancer is combinedly used with the polyamide resin in production of the fibers. The obtained fibers have good color developability and are excellent not only in washing fastness but also in light fastness. The fibers can be produced so as to exhibit the texture of the polyamide elastomer, so that the resulting fibers have excellent texture.

In contrast, Comparative Example 1 does not have sufficient spinnability because the polyamide elastomer is fiberized without an amino group-containing color enhancer. Also, the obtained fibers do not show sufficient color development and have inferior washing fastness and light fastness compared with those of Examples 1 to 3. Comparative Example 2 does not have sufficient spinnability because an excessive amount of the amino group-containing color enhancer is added to raise the concentration of terminal amino groups. The obtained fibers have lower tenacity than and also have inferior washing fastness and light fastness to those of Examples 1 to 3. As a result of the higher proportion of the amino group-containing color enhancer, the fibers have a smaller content of the elastomer component, resulting in inferior texture of the fiber to those of Examples 1 to 3.

INDUSTRIAL APPLICABILITY

The polyamide fiber according to the present invention can exhibit improved color developability while maintaining characteristics of the polyamide resin. Therefore, the polyamide fiber is useful for making a fiber structure such as a fabric and a rope. For example, the polyamide fiber may be advantageously used for various clothes (outerwear, innerwear, uniforms, surgical gowns, patient gowns, doctor's smocks, workwear, swimwear, skiwear, aprons, hats, belly bands, socks, gloves, mufflers, etc.), various household items (duvets or comforters, duvet covers, pillow covers, beds, bedding covers, blankets, sheets, bath mats, towels, tablecloths, curtains, shower curtains, nets, door knob covers, diaper covers, slippers, etc.), building materials (carpets, curtains, etc.), industrial materials (ropes, etc.), agriculture, forestry and fisheries materials (fishing nets, etc.).

**Claims**

1. A polyamide fiber comprising a polyamide resin composition comprising a polyamide resin and an amino group-containing color enhancer,
the polyamide fiber having terminal amino groups at a concentration of from 5.0 $\mu$eq/g to 40.0 $\mu$eq/g.

2. The polyamide fiber according to claim 1, wherein the polyamide resin has a repeating unit which includes a linear or branched saturated aliphatic hydrocarbon group having 1 to 22 carbon atoms.

3. The polyamide fiber according to claim 1 or 2, wherein the polyamide resin contains a polyamide elastomer.

4. The polyamide fiber according to any one of claims 1 to 3, wherein the amino group-containing color enhancer comprises a polyamide oligomer.

5. The polyamide fiber according to claim 4, wherein the polyamide oligomer has a number-average molecular weight of from 500 to 10000.

6. The polyamide fiber according to any one of claims 1 to 5, wherein the amino group-containing color enhancer has terminal amino groups at a concentration of from 100 $\mu$eq/g to 2000 $\mu$eq/g.

7. The polyamide fiber according to any one of claims 1 to 6, wherein the polyamide fiber contains the polyamide resin and the amino group-containing color enhancer at a mass ratio (the former / the latter) of from 99/1 to 70/30.

8. The polyamide fiber according to any one of claims 1 to 7, wherein a DSC curve of the polyamide fiber obtained using differential scanning calorimetry shows a melt peak in a single peak form.

9. A fiber structure comprising polyamide fibers as recited in any one of claims 1 to 8.

10. A method of producing polyamide fibers as recited in any one of claims 1 to 8, the method at least comprising:

   melt-kneading a polyamide resin composition including a polyamide resin and an amino group-containing color enhancer to give a melt-kneaded product having a predetermined melt viscosity; and
   spinning the melt-kneaded product to give fibers.

**INTERNATIONAL SEARCH REPORT**

| International application No. |
| --- |
| PCT/JP2020/042138 |

**A. CLASSIFICATION OF SUBJECT MATTER**
D01F 6/90(2006.01)i; C08L 77/00(2006.01)i
FI: D01F6/90 301; C08L77/00
According to International Patent Classification (IPC) or to both national classification and IPC

**B. FIELDS SEARCHED**

Minimum documentation searched (classification system followed by classification symbols)
D01F1/00-9/04; C08K3/00-13/08; C08L1/00-101/14

| Documentation searched other than minimum documentation to the extent that such documents are included in the fields searched | |
| --- | --- |
| Published examined utility model applications of Japan | 1922-1996 |
| Published unexamined utility model applications of Japan | 1971-2021 |
| Registered utility model specifications of Japan | 1996-2021 |
| Published registered utility model applications of Japan | 1994-2021 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X<br>A | JP 49-1016 B1 (TORAY INDUSTRIES, INC.) 11 January 1974 (1974-01-11) claims, page 1, left column, lines 24-27, page 2, left column, lines 38-40, example 1, table 1 | 1-3, 7-10<br>4-6 |
| X | JP 1-229810 A (KANEBO KABUSHIKI KAISHA) 13 September 1989 (1989-09-13) claims, page 1, right column, lines 9-14, page 2, lower right column, line 19 to page 3, upper left column, examples 1-4, table 1 | 1-10 |
| A | JP 10-259306 A (UNITIKA LTD.) 29 September 1998 (1998-09-29) paragraph [0003] | 1-10 |
| A | JP 2003-3062 A (TORAY INDUSTRIES, INC.) 08 January 2003 (2003-01-08) paragraphs [0003], [0004] | 1-10 |
| A | JP 2002-339163 A (UNITICA FIBERS LTD.) 27 November 2002 (2002-11-27) paragraph [0034] | 1-10 |
| A | JP 52-124927 A (TEIJIN LTD.) 20 October 1977 (1977-10-20) claims | 1-10 |

☒ Further documents are listed in the continuation of Box C.    ☒ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search<br>04 January 2021 (04.01.2021) | Date of mailing of the international search report<br>19 January 2021 (19.01.2021) |
| --- | --- |
| Name and mailing address of the ISA/<br>Japan Patent Office<br>3-4-3, Kasumigaseki, Chiyoda-ku,<br>Tokyo 100-8915, Japan | Authorized officer<br><br>Telephone No. |

Form PCT/ISA/210 (second sheet) (January 2015)

**INTERNATIONAL SEARCH REPORT**

| | International application No. |
|---|---|
| | PCT/JP2020/042138 |

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2011-52347 A (ASAHI KASEI FIBERS CORP.) 17 March 2011 (2011-03-17) paragraph [0021] | 1-10 |
| A | JP 3-128966 A (MITSUBISHI KASEI CORP.) 31 May 1991 (1991-05-31) claims, page 2, upper left column, line 18 to upper right column, line 5 | 1-10 |

Form PCT/ISA/210 (continuation of second sheet) (January 2015)

**INTERNATIONAL SEARCH REPORT**
Information on patent family members

| International application no. |
| --- |
| PCT/JP2020/042138 |

| Patent Documents referred in the Report | Publication Date | Patent Family | Publication Date |
| --- | --- | --- | --- |
| JP 49-1016 B1 | 11 Jan. 1974 | (Family: none) | |
| JP 1-229810 A | 13 Sep. 1989 | US 5194319 A<br>claims, column 5,<br>lines42-48, examples<br>EP 331876 A2<br>KR 10-1989-0014622 A | |
| JP 10-259306 A | 29 Sep. 1998 | US 5886096 A<br>column, 1, lines 17-34<br>CN 1177614 A<br>KR 10-0471697 B1 | |
| JP 2003-3062 A | 08 Jan. 2003 | (Family: none) | |
| JP 2002-339163 A | 27 Nov. 2002 | (Family: none) | |
| JP 52-124927 A | 20 Oct. 1977 | (Family: none) | |
| JP 2011-52347 A | 17 Mar. 2011 | (Family: none) | |
| JP 3-128966 A | 31 May 1991 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019206559 A
- JP 2010189773 A

- JP 2017146018 A